# EUROPEAN PATENT APPLICATION

(11) **EP 4 053 933 A1**
(43) Date of publication of application: **07.09.2022**
(21) Application number: 20881935.9
(22) Date of filing: 19.10.2020
(51) Int. Cl.: H01M 4/13, H01M 4/139, H01M 4/66, H01M 10/052, H01M 10/0587, H01M 50/531

(54) **ELECTRODE PLATE, NONAQUEOUS ELECTROLYTE SECONDARY BATTERY, AND METHOD FOR PRODUCING ELECTRODE PLATE**

(30) Priority: 01.11.2019 JP 2019199732
(71) Applicant: SANYO Electric Co., Ltd., Daito-shi Osaka 574-8534 (JP)
(72) Inventor: TSUKAMOTO, Kentaro, Osaka-shi, Osaka 540-6207 (JP); MAGARI, Yoshifumi, Osaka-shi, Osaka 540-6207 (JP)
(74) Representative: Novagraaf International SA
(86) International application number: PCT/JP2020/039214
(87) International publication number: WO 2021/085202

(57) **Abstract**

An electrode plate which is to be contained in a wound or multilayer electrode body, and which is provided with: a band-like electrode plate core body; mixture layers that are formed on both surfaces of the electrode plate core body; and a tab that extends from one end of the electrode plate core body in the short-side direction. With respect to this electrode plate, the front edge of the electrode plate core body at the end from which the tab extends is covered by the mixture layers.

## Description

### TECHNICAL FIELD

The present disclosure relates to an electrode plate, non-aqueous electrolyte secondary battery, and a method for producing an electrode plate.

### BACKGROUND ART

An electrode plate of a positive electrode or a negative electrode that configures a non-aqueous electrolyte secondary battery has a mixture layer on a surface of each electrode core body. If the active material included in the mixture layer falls off inside of the battery, an internal short circuit may occur, and the reliability of the battery can be improved by suppressing falling-off of the active material. The active material especially tends to fall off at the end portion of the electrode plate, and therefore, for example, Patent Literature 1 discloses a secondary battery in which the mixture layer is removed from the end portion of the electrode plate.

### CITATION LIST

### PATENT LITERATURE

PATENT LITERATURE 1: Japanese Unexamined Patent Application Publication No. 2010-34009

### SUMMARY

In the method disclosed in Patent Literature 1, there is the possibility that the active material falls off in the interface between the part where the electrode core body is exposed and the part where the mixture layer is formed on the surface of the electrode core body, and there is still room for improvement.

An electrode plate that is one aspect of the present disclosure is an electrode plate included in a wound type or stacked type electrode assembly, and comprises a band-shaped electrode core body, a mixture layer formed on both surfaces of the electrode core body, and a tab extended from one end portion of the electrode core body in a short side direction of the electrode core body, in which a tip end portion of the electrode core body is covered with the mixture layer in the end portion on a side where the tab extends.

A non-aqueous electrolyte secondary battery that is one aspect of the present disclosure is a non-aqueous electrolyte secondary battery comprising a wound type or stacked type electrode assembly including the above described electrode plate, an exterior body having an opening that houses the electrode assembly, and a sealing plate that seals the opening and is connected with the tab, in which as for a width, in the short side direction of the electrode core body, of the tip end portion of the electrode core body, a width "a" in one surface is larger than a width "b" in the other surface, and a root of the tab tilts, and an angle formed by a surface of the tab on a side where the width of the tip end portion is "a" and a top surface of the electrode assembly is an obtuse angle.

A method for producing an electrode plate that is one aspect of the present disclosure is a method for producing an electrode plate included in a wound type or stacked type electrode assembly, and includes a mixture layer forming step of forming a band-shaped mixture layer on both surfaces of a base material for a band-shaped electrode core body along a longitudinal direction of the base material for the band-shaped electrode core body, and a cutting step of cutting out an electrode plate having the band-shaped electrode core body with the mixture layer formed on the both surfaces, and a tab extended from one end portion of the electrode core body in a short side direction of the electrode core body, by irradiating one surface of the base material for the electrode core body with laser light, in which in the electrode plate that is cut out in the cutting step, a tip end portion of the electrode core body is covered with the mixture layer in the end portion on a side where the tab extends.

According to one aspect of the present disclosure, it is possible to suppress falling-off of an active material from the electrode plate.

### BRIEF DESCRIPTION OF DRAWING

FIG. 1 is a perspective view showing a rectangular non-aqueous electrolyte secondary battery that is one example of an embodiment.
FIG. 2 is a front vertical sectional view seen in an A-A direction in FIG. 1.
FIG. 3 is a perspective view of an electrode group of the non-aqueous electrolyte secondary battery shown in FIG. 2, which is a view in which an outer end of winding of an electrode assembly on a front side is developed.
FIG. 4 is a front view showing a negative electrode plate in one example of the embodiment in a developed state.
FIG. 5 is a sectional view taken along the line C-C in FIG. 4.
FIG. 6 is a photograph of a tip end portion and a vicinity thereof taken by a scanning electron microscope in a section in which a negative electrode plate in one example of the embodiment is cut along a thickness direction.
FIG. 7 is a sectional view in which a negative electrode tab and surroundings thereof are enlarged in a section along the line B-B in FIG. 2.
FIG. 8 is a view for explaining a method for cutting a negative electrode plate in one example of the embodiment.

### DESCRIPTION OF EMBODIMENTS

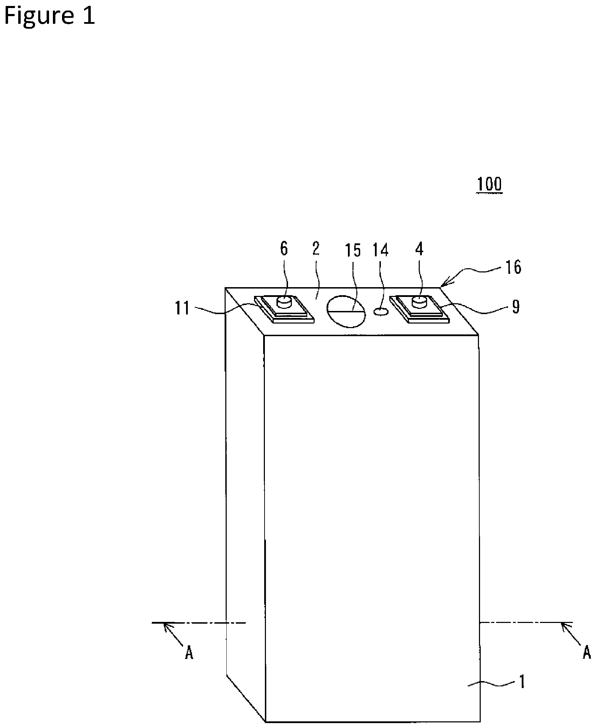

Hereinafter, one example of an embodiment will be described in detail. In the present description, the vertical direction of the paper in FIG. 1 to FIG. 3 may be represented by "up and down", the horizontal direction by "left and right", and the depth direction by "front and back".

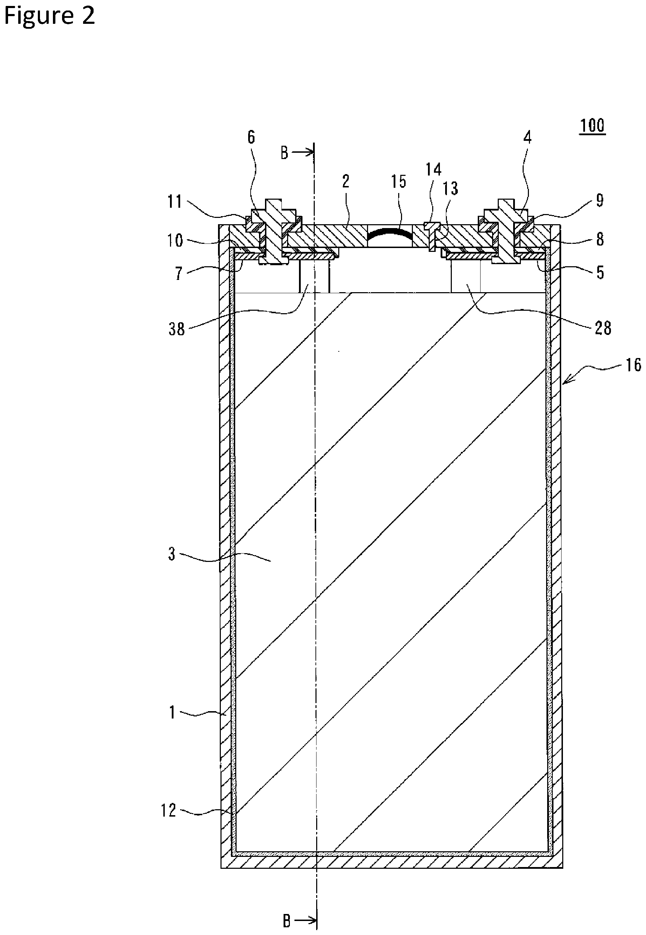

A configuration of a non-aqueous electrolyte secondary battery 100 that is one example of the embodiment will be described with reference to FIG. 1 and FIG. 2. FIG. 1 is a perspective view showing an appearance of the non-aqueous electrolyte secondary battery 100 that is one example of the embodiment, and FIG. 2 is a front vertical sectional view seen in an A-A direction in FIG. 1. As shown in FIG. 1 and FIG. 2, the non-aqueous electrolyte secondary battery 100 comprises a battery case 16 having an exterior body 1 having an opening in a top part, and a sealing plate 2 that seals the opening. The exterior body 1 and the sealing plate 2 are each preferably made of a metal and can be made of an aluminum or an aluminum alloy, for example. The exterior body 1 is a rectangular bottomed cylindrical exterior body that has a bottom portion and side walls and has an opening in a position facing the bottom portion. The non-aqueous electrolyte secondary battery 100 shown in FIG. 1 is an example of the rectangular non-aqueous electrolyte secondary battery having the rectangular battery case 16, but the non-aqueous electrolyte secondary battery of the present embodiment is not limited to this. For example, the non-aqueous electrolyte secondary battery may have a battery case in which a shape of an opening portion is circular, oblong, or elliptical, or may be a laminate non-aqueous electrolyte secondary battery having a laminate sheet battery case formed by laminating a metal foil with a resin sheet, or the like. The sealing plate 2 is connected to an opening edge portion of the rectangular exterior body 1 by laser welding or the like.

The sealing plate 2 has an electrolyte solution injection hole 13. The electrolyte solution injection hole 13 is sealed by a sealing plug 14 after an electrolyte solution described later is injected. Further, the sealing plate 2 has a gas exhaust vent 15. The gas exhaust vent 15 operates when pressure inside the battery has a predetermined value or more, and discharges gas inside of the battery to outside of the battery.

A positive electrode terminal 4 is mounted to the sealing plate 2 to protrude to outside of the battery case 16. Specifically, the positive electrode terminal 4 is inserted in a positive electrode terminal mounting hole formed in the sealing plate 2, and is mounted to the sealing plate 2 in a state electrically insulated from the sealing plate 2 by an outer side insulating member 9 disposed outside of the battery in the positive electrode terminal mounting hole, and an inner side insulating member 8 disposed inside of the battery. The positive electrode terminal 4 is electrically connected to a positive electrode current collector 5 in the battery case 16. The positive electrode current collector 5 is provided at the sealing plate 2 with the inner side insulating member 8 between the positive electrode current collector 5 and the sealing plate 2. The inner side insulating member 8 and the outer side insulating member 9 are each preferably made of a resin.

Further, a negative electrode terminal 6 is mounted to the sealing plate 2 to protrude to outside of the battery case 16. Specifically, the negative electrode terminal 6 is inserted in a negative electrode terminal mounting hole formed in the sealing plate 2, and is mounted to the sealing plate 2 in a state electrically insulated from the sealing plate 2 by an outer side insulating member 11 disposed outside of the battery in the negative electrode terminal mounting hole, and an inner side insulating member 10 disposed inside of the battery. The negative electrode terminal 6 is electrically connected to a negative electrode current collector 7 in the battery case 16. The negative electrode current collector 7 is provided at the sealing plate 2 with the inner side insulating member 10 between the negative electrode current collector 7 and the sealing plate 2. The inner side insulating member 10 and the outer side insulating member 11 are each preferably made of a resin.

The non-aqueous electrolyte secondary battery 100 comprises an electrode group 3 and an electrolyte solution, and the exterior body 1 houses the wound type electrode group 3 and the electrolyte solution. As described later, the electrode group 3 includes two electrode assemblies each having a wound structure in which a positive electrode plate 20 and a negative electrode plate 30 are wound via separators 40. At an upper part of the electrode group 3, positive electrode tabs 28 and negative electrode tabs 38 protrude respectively from the positive electrode plate 20 and the negative electrode plate 30. The positive electrode tab 28 and the negative electrode tab 38 are bent in a depth direction, and are respectively connected to the positive electrode current collector 5 and the negative electrode current collector 7 by welding or the like. The electrode assembly is not limited to the wound type and may be of a stacked type.

As shown in FIG. 2, the non-aqueous electrolyte secondary battery 100 can comprise an insulating sheet 12 that is disposed between the electrode group 3 and the exterior body 1. The insulating sheet 12 has, for example, a bottomed box shape or a bag shape with an opening at a top part similarly to the exterior body 1. Since the insulating sheet 12 has a bottomed box shape or a bag shape having the opening at the top part, it is possible to insert the electrode group 3 from the opening of the insulating sheet 12, and cover the electrode group 3 with the insulating sheet 12. A material of the insulating sheet 12 is not particularly limited, as long as the material has electrical insulation, chemical stability for the material not being corroded by the electrolyte solution, and electrical stability for the material not being electrolyzed against a voltage of the non-aqueous electrolyte secondary battery 100. As the material of the insulating sheet 12, a resin material such as polyethylene, polypropylene, and polyethylene fluoride can be used from viewpoints of industrial versatility, manufacturing cost, and quality stability, for example.

The electrolyte solution includes a solvent, and electrolyte salt dissolved in the solvent. As the solvent, a non-aqueous solvent can be used. As the non-aqueous solvent, for example, carbonates, esters, ethers, nitriles, amides, a mixed solvent of two or more of these, and the like may be used. As carbonates, there are cited cyclic carbonates such as an ethylene carbonate (EC), propylene carbonate (PC), butylene carbonate, and vinylene carbonate, and chain carbonates such as a dimethyl carbonate (DMC), ethyl methyl carbonate (EMC), diethyl carbonate (DEC), methyl propyl carbonate, ethyl propyl carbonate, and methyl isopropyl carbonate. The non-aqueous solvent may contain a halogen substituent in which at least a part of hydrogen in the above solvent is replaced with a halogen atom such as fluorine. The electrolyte solution is not limited to a liquid electrolyte and may be a solid electrolyte using a gel polymer or the like. The electrolyte salt includes a lithium salt. As the lithium salt, it is possible to use LiPF₆ or the like that is generally used as a supporting electrolyte in the conventional non-aqueous electrolyte secondary battery 100. Further, an additive such as vinylene carbonate (VC) can be properly added.

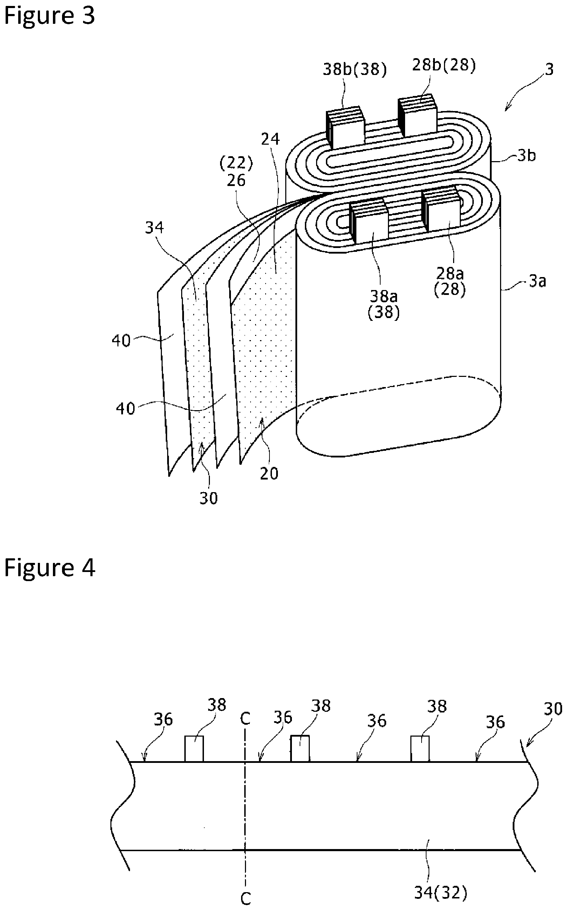

FIG. 3 is a perspective view of the electrode group 3 formed of two wound electrode assemblies 3a and 3b, which is a view in which an outer end of winding of the electrode assembly 3a at a front side is developed. The electrode assemblies 3a and 3b each has a wound structure in which the positive electrode plate 20 and the negative electrode plate 30 are wound via the separators 40. The electrode assemblies 3a and 3b are each shaped by being pressed after being wound, and therefore, each has a flat shape in which surfaces at the front side and the back side are substantially parallel and left and right ends are curved. The number of electrode assemblies that confiture the electrode group 3 is not limited to two, and may be one or three or more. Further, a bundle of positive electrode tabs 28 (hereinafter, may be referred to as "positive electrode tab group") protrude upward from each of the positive electrode assemblies 3a and 3b. A bundle of negative electrode tabs 38 (hereinafter, may be referred to as "negative electrode tab group") also protrude upward from each of the electrode assemblies 3a and 3b similarly to the positive electrode tab group. The numbers of positive electrode tab groups and negative electrode tab groups, and the numbers of the respective electrode tabs configuring them are not particularly limited.

For the separator 40, a porous sheet having ion permeability and insulation is used. Specific examples of the porous sheet include microporous membranes, woven fabrics, nonwoven fabrics and the like. As a material of the separator 40, olefin resins such as polyethylene and polypropylene, cellulose and the like are preferable. The separator 40 may be a stack having a cellulose fiber layer and a thermoplastic resin fiber layer of olefin resin or the like. Further, the separator 40 may be a multilayer separator including a polyethylene layer and a polypropylene layer, and it is possible to use the separator 40 with a surface thereof coated with a resin such as an aramid resin, or inorganic fine particles of alumina, titania or the like.

Hereinafter, the positive electrode plate 20 and the negative electrode plate 30 that configure the electrode group 3 will be described in detail with reference to FIG. 3 to FIG. 5.

First, the positive electrode plate 20 will be described. As shown in FIG. 3, the positive electrode plate 20 has a band-shaped positive electrode core body 22, a positive electrode mixture layers 24 formed on both surfaces of the positive electrode core body 22, and the positive electrode tabs 28 extended upward from one end portion of the positive electrode core body 22 in a short side direction of the positive electrode core body 22.

For the positive electrode core body 22, a foil of a metal that is stable within a potential range of the positive electrode plate 20 such as aluminum is used. The thickness of the positive electrode core body 22 is, for example, 10 to 20 µm.

The positive electrode mixture layer 24 is formed into a band shape on at least a part of the surface of the positive electrode core body 22, along a longitudinal direction of the positive electrode core body 22. The positive electrode mixture layer 24 is preferably provided at corresponding positions on both the surfaces of the positive electrode core body 22. The positive electrode mixture layer 24 includes a positive electrode active material, a binder, and a conductive agent, and can be produced by coating both the surfaces of the positive electrode core body 22 with a positive electrode active material slurry including the positive electrode active material, binder, conductive agent and the like, drying a coating film, and thereafter compressing the coating film by a roller or the like.

As the positive electrode active material, a lithium metal composite oxide expressed by a general formula Li₁₊ₓMₐO_{2+b} (in the formula, x, a, and b satisfy the conditions of x+a=1, -0.2<x≤0.2, and -0.1≤b≤0.1, M includes Ni and Co, and includes at least one element selected from the group consisting of Mn and Al). As the positive electrode active material, a small amount of other lithium metal composite oxides or the like may be included, but the lithium metal composite oxide expressed by the above described general formula is preferably used as a main component.

The lithium metal composite oxide may include the other elements than Ni, Co, Mn, and Al. As the other elements, there are cited alkali metal elements other than Li, transition metal elements other than Ni, Co, and Mn, alkaline earth metal elements, group 12 elements, group 13 elements other than Al, and group 14 elements. Specifically, Zr, B, Mg, Ti, Fe, Cu, Zn, Sn, Na, K, Ba, Sr, Ca, W, Mo, Nb, Si and the like can be illustrated. Particles of an inorganic compound such as a zirconium oxide, tungsten oxide, aluminum oxide, and lanthanoid-containing compounds may adhere to the particle surface of the lithium metal composite oxide.

A particle size of the lithium metal composite oxide is not particularly limited, and an average particle size is preferably 2 µm or more to less than 30 µm, for example. When the average particle size is less than 2 µm, conduction by the conductive agent in the positive electrode mixture layer 24 may be inhibited to increase resistance. On the other hand, when the average particle size is 30 µm or more, load characteristics may decrease due to decrease in reaction area. The average particle size means a volume average particle size measured by a laser diffraction method, and a median diameter at which a volume integrated value is 50% in a particle size distribution. The average particle size can be measured by using the laser diffraction/scattering type particle size distribution measuring device (made by HORIBA, Ltd.).

As the binder included in the positive electrode mixture layer 24, there are cited fluorine resin such as polytetrafluoroethylene (PTFE), and polyvinylidene fluoride (PVdF), polyacrylonitrile (PAN), polyimide resin, acrylic resin, polyolefin resin and the like. One of these binders may be used alone, or a plurality of types may be mixed and used.

As the conductive agent included in the positive electrode mixture layer 24, there are cited carbon materials such as carbon black (CB), acetylene black (AB), Ketjen black and graphite, and the like. One of these conductive agents may be used alone, or a plurality of types may be mixed and used.

A filling density of the positive electrode mixture layer 24 may be 2.0 g/cm³ to 4.0 g/cm³. The higher the filling density of the positive electrode mixture layer 24, the larger the capacity of the battery.

As shown in FIG. 3, a positive electrode mixture layer uncoated portion 26 is a region where the positive electrode mixture layer 24 is not formed and the positive electrode core body 22 is exposed, on the surface of the positive electrode core body 22. Further, in the positive electrode plate 20, the positive electrode mixture layer uncoated portion 26 may not exist as in the negative electrode plate 30 described later, and the positive electrode mixture layer 24 may be formed on the entire surface of the positive electrode core body 22. Further, in the short side direction of the positive electrode core body 22, a tip end portion of the positive electrode core body 22 in an end portion on a side where the positive electrode tab 28 extends may be covered with the positive electrode mixture layer 24.

The positive electrode tab 28 extends from one end portion of the positive electrode core body 22 in the short side direction. The positive electrode plate 20 has a plurality of positive electrode tabs 28 in the longitudinal direction of the positive electrode core body 22, and distances among the positive electrode tabs 28 in the longitudinal direction of the positive electrode core body 22 are adjusted such that the positive electrode tabs 28 are aligned when the positive electrode core body 22 is wound.

A protection layer having higher electric resistance than the positive electrode core body 22 may be provided to cover a part or whole of the positive electrode mixture layer uncoated portion 26 including roots of the positive electrode tabs 28. The protection layer is provided to suppress occurrence of conduction in an unintended portion of the positive electrode mixture layer uncoated portion 26. The thickness of the protection layer is, for example, 20 µm to 120 µm, and may be 50 µm to 100 µm. The protection layer may include ceramic particles such as alumina, zirconia, titania and silica, and a binder such as polyvinylidene fluoride (PVdF).

A shape of the positive electrode tab 28 is not particularly limited, and may be a lateral symmetrical shape, for example. Further, the respective shapes of the positive electrode tabs 28 may be different, but are preferably same shapes in order to bundle the positive electrode tabs 28.

Next, the negative electrode plate 30 will be described. As shown in FIG. 3, the negative electrode plate 30 has a band-shaped negative electrode core body 32, negative electrode mixture layers 34 that are formed on both surfaces of the negative electrode core body 32, and negative electrode tabs 38 extended upward from one end portion of the negative electrode core body 32 in a short side direction of the negative electrode core body 32.

For the negative electrode core body 32, it is possible to use a foil of a metal that is stable within a potential range of the negative electrode plate 30 such as copper is used. The thickness of the negative electrode core body 32 is, for example, 5 to 15 µm.

The negative electrode mixture layer 34 is formed in a band shape on a surface of the negative electrode core body 32, along a longitudinal direction of the negative electrode core body 32 and may be formed on the entire surface of the negative electrode core body 32. Further, the negative electrode mixture layer 34 is preferably provided at corresponding positions on both the surfaces of the negative electrode core body 32. The negative electrode plate 30 includes a negative electrode active material and a binder. The negative electrode plate 30 can be produced by coating a negative electrode active material slurry including the negative electrode active material, binder, and the like on the negative electrode core body 32, drying a coating film, and thereafter compressing the coating film by a roller or the like to form the negative electrode mixture layer 34 on both the surfaces of the negative electrode core body 32.

As the negative electrode active material, there is cited a low crystalline carbon coated graphite made by forming a coating film of low crystalline carbon on a surface of graphite, for example. The low crystalline carbon is a carbon material in a state of amorphous or microcrystals with a disordered layer structure in which a graphite crystal structure does not develop, or a carbon material with a very fine particle size rather than a spherical or scaly shape. For example, carbon materials with a d(002) plane spacing larger than 0.340 nm by X-ray diffraction are low crystalline carbons. Further, carbon materials with an average particle size of primary particles observed and measured by a scanning electron microscope (SEM) or the like of 1 µm or less are also low crystalline carbons. Specific examples of the low crystallin carbon include, for example, carbon black such as hard carbon (non-graphitizable carbon), soft carbon (graphitizable carbon), acetylene black, Ketjen black, thermal black, and furnace black, carbon fibers, activated carbon and the like. As the negative electrode active material is not particularly limited as long as it can reversely store and release lithium ions, and it is possible to use a carbon material such as natural graphite, or artificial graphite, a metal that alloys with Li such as silicon (Si) or tin (Sn), an oxide including a metal element such as Si or Sn or the like. Further, the negative electrode mixture layer 34 may include a lithium-titanium composite oxide.

As the binder included in the negative electrode mixture layer 34, it is possible to use a well-known binder, and as in the case of the positive electrode mixture layer 24, it is possible to use fluorine resin such as PTFE, and PVdF, PAN, polyimide resin, acrylic resin, polyolefin resin and the like. Further, as the binder that is used when the negative electrode active material slurry is prepared by using an aqueous solvent, it is possible to illustrate CMC or salt thereof, styrene butadiene rubber (SBR), polyacrylic acid (PAA) or salt thereof, polyvinyl alcohol (PVA) and the like.

A filling density of the negative electrode mixture layer 34 may be 1.0 g/cm³ to 2.0 g/cm³. The higher the filling density of the negative electrode mixture layer 34, the larger the capacity of the battery.

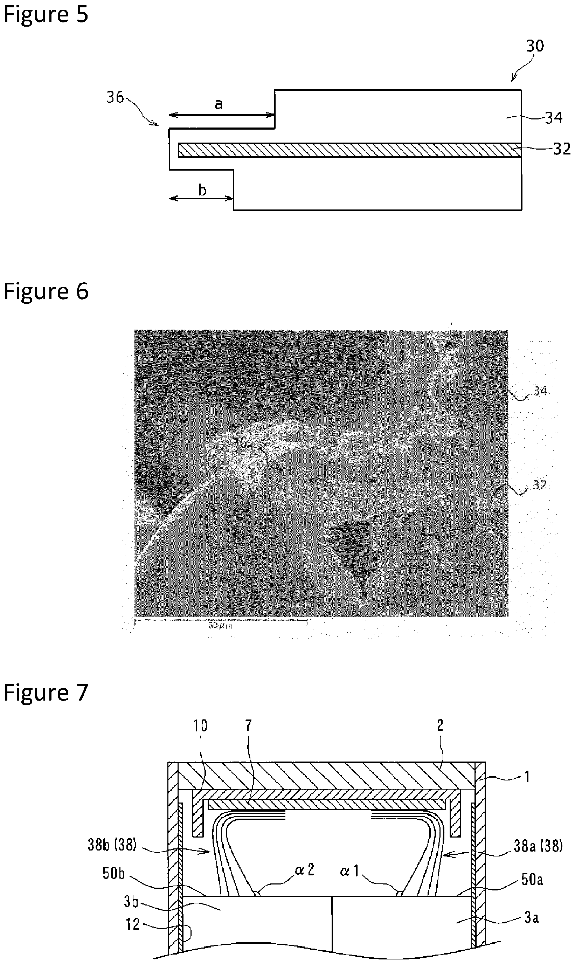

Next, the negative electrode plate 30 will be described with reference to FIG. 4 and FIG. 5. FIG. 4 is a front view showing the negative electrode plate 30 in a developed state, and FIG. 5 is a sectional view taken along the line C-C in FIG. 4. As shown in FIG. 4, the negative electrode plate 30 has a plurality of negative electrode tabs 38 in the longitudinal direction of the negative electrode core body 32, and distances among the negative electrode tabs 38 in the longitudinal direction of the negative electrode core body 32 are adjusted such that the negative electrode tabs 38 are aligned when the negative electrode core body 32 is wound.

A shape of the negative electrode tab 38 is not particularly limited, and may be a lateral symmetrical shape, for example. Further, the respective shapes of the negative electrode tabs 38 may be different, but are preferably same shapes in order to bundle the negative electrode tabs 38.

As shown in FIG. 5, at an end portion on a side where the negative electrode tabs 38 extend, a tip end portion 36 of the negative electrode core body 32 is covered with the negative electrode mixture layer 34. Thereby, there is no interface between a portion where the negative electrode core body 32 is exposed and a portion where the negative electrode mixture layer 34 is formed on the surface of the negative electrode core body 32, in the tip end portion 36, so that it is possible to suppress falling-off of the negative electrode active material from the negative electrode plate 30. Here, the tip end portion 36 refers to an end surface of the negative electrode core body 32 in the end portion on the side where the negative electrode tab 38 of the negative electrode core body 32 extends, and a portion adjacent to the end surface of the negative electrode core body 32 in the surface of the negative electrode core body 32.

The thickness of the negative electrode mixture layer 34 that covers the tip end portion 36 may be thinner than the thickness of one surface of the negative electrode mixture layer 34 formed on an inner side from the tip end portion 36 of the negative electrode core body 32.

Further, as for a width, in the short side direction of the negative electrode core body 32, of the tip end portion 36 of the negative electrode core body 32, a width "a" in one surface may be larger than a width "b" in the other surface. In FIG. 5, the tip end portion 36 is formed of an end surface of the negative electrode core body 32, and portions of the width "a" and the width "b" adjacent to the end surface of the negative electrode core body 32 in the surface of the negative electrode core body 32. Further, in FIG. 5, the thickness of the negative electrode mixture layer 34 that covers the tip end portion 36 is substantially uniform, but may be ununiform.

The width "a" of the tip end portion 36 in one surface is, for example, 30 µm to 100 µm. The width "b" of the tip end portion 36 in the other surface is, for example, 5 µm to 50 µm.

FIG. 6 is a photograph of the tip end portion 36 and a vicinity thereof photographed by a scanning electron microscope, in a section of the negative electrode plate 30 cut along the thickness direction. The thickness of the negative electrode plate 30 is 169 µm, and the negative electrode core body 32 is a copper plate with the thickness of 8 µm. The negative electrode mixture layer 34 is formed from 98.3% by mass of graphite, 0.7% by mass of CMC, and 1.0% by mass of SBR, and the filling density is 1.6 g/cm³. A method for producing the negative electrode plate 30 will be described in detail later, and the vicinity of the tip end portion 36 is cut by laser light. The above described negative electrode plate 30 was irradiated with laser light with a wavelength of 1.06 µm, peak output power of 37.5 kW, a repetition frequency of 20 kHz, and a pulse width of 100 ns at a scanning speed of 30 m/min while condensing with a lens with a focal length of 100 mm. Energy per electrode plate thickness was 0.89 mJ/mm·µm. The energy per electrode plate thickness is expressed by "energy per electrode plate thickness = pulse energy (mJ) × number of irradiations per 1 mm / electrode plate thickness (µm)". Here, the number of irradiations per 1 mm is a number of times of laser light with which the electrode plate is irradiated while the electrode plate advances by 1 mm. The negative electrode plate 30 was irradiated with laser light so as to be located substantially at a position of a beam waist of the laser light. In FIG. 6, as in the sectional view of the negative electrode plate 30 shown in FIG. 5, the tip end portion 36 is covered with the negative electrode mixture layer 34. Further, the thickness of the negative electrode mixture layer 34 that covers the tip end portion 36 is thinner than the thickness of one surface of the negative electrode mixture layer 34 that is formed on an inner side from the tip end portion 36.

As shown in FIG. 6, the tip end portion 36 may have a claw shape in a sectional view taken along the thickness direction of the negative electrode core body 32. Thereby, a binding force of the tip end portion 36 and the negative electrode mixture layer 34 is improved, and therefore it is possible to further suppress falling-off of the active material. Further, since the claw shape is covered with the negative electrode mixture layer 34, it is possible to prevent the claw shape from contacting and damaging the separator 40.

Next, the negative electrode tab 38 inside of the non-aqueous electrolyte secondary battery 100 will be described with reference to FIG. 7. FIG. 7 is a sectional view in which the negative electrode tab 38 and surroundings thereof are enlarged in a section along the line B-B in FIG. 2. A negative electrode tab 38a extending from the electrode assembly 3a has a root tilted to a front side in the depth direction and is connected with the negative electrode current collector 7 mounted to the sealing plate 2 after bending. Here, the surface on the side where the width of the tip end portion 36 not illustrated in FIG. 7 is "a" faces a back side in the depth direction, and an angle α1 formed by the surface on the side where the width of the tip end portion 36 of the negative electrode tab 38a is "a" and a top surface 50a of the electrode assembly 3a may be an obtuse angle. Further, a negative electrode tab 38b extending from the electrode assembly 3b has a root tilted to the back side in the depth direction and is connected with the negative electrode current collector 7 mounted to the sealing plate 2 after bending. Here, the surface on the side where the width of the tip end portion 36 not illustrated in FIG. 7 is "a" faces the front side in the depth direction, and an angle α2 formed by the surface on the side where the width of the tip end portion 36 of the negative electrode tab 38b is "a" and a top surface 50b of the electrode assembly 3b may be an obtuse angle. α1 and α2 may be same angles or may be different.

Further, as shown in FIG. 3, it is possible to align the surfaces of the tip end portions 36 by making the negative electrode tabs 38a and 38b be on only one side with respect to the winding cores of the respective electrode assemblies 3a and 3b. In FIG. 3, the negative electrode tabs 38a and 38b are made be on respective sides close to the exterior body 1 in the depth direction, and therefore, when the electrode group 3 is housed in the non-aqueous electrolyte secondary battery 100 as shown in FIG. 7, the surface on the side where the width of the tip end portion 36 of the negative electrode tab 38 is "a" faces an inside of winding.

Next, a method for producing the negative electrode plate 30 will be described. The method for producing the negative electrode plate 30 includes a mixture layer forming step and a cutting step. In the mixture layer forming step, the band-shaped negative electrode mixture layers 34 are formed on both surfaces of a base material for the band-shaped negative electrode core body 32 along the longitudinal direction of the base material for the band-shaped negative electrode core body 32. The negative electrode mixture layer 34 can be produced by coating the surface of the base material for the negative electrode core body 32 with a negative electrode active material slurry including a negative electrode active material, a binder and the like, drying the coated film, and thereafter compressing the coated film by a roller or the like to form the negative electrode mixture layer 34 on both the surfaces of the negative electrode core body 32. In the cutting step, one surface of the base material for the negative electrode core body 32 is irradiated with laser light, and thereby the negative electrode plate 30 is cut out, which has the band-shaped negative electrode core body 32 with the negative electrode mixture layer 34 formed on both the surfaces, and the negative electrode tabs 38 extended from one end portion of the negative electrode core body 32 in the short side direction. In the negative electrode plate 30 cut out in the cutting step, the tip end portion 36 of the negative electrode core body 32 is covered with the negative electrode mixture layer 34 in the end portion on the side where the tab extends.

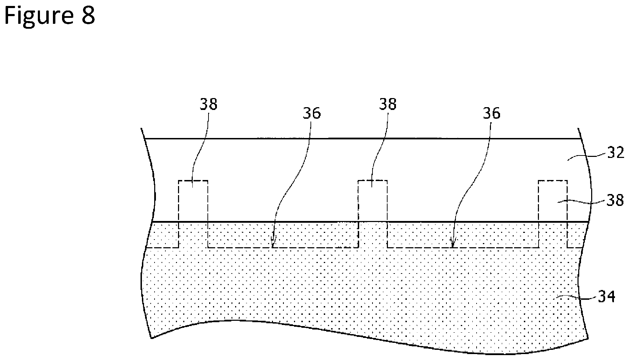

Hereinafter, a method for cutting the negative electrode plate 30 will be described, and the positive electrode plate 20 may also be cut similarly. FIG. 8 is a view for explaining one example of the method for cutting the negative electrode plate 30. A dotted line in FIG. 8 shows a scan trace of laser light. The band-shaped negative electrode mixture layer 34 is formed on both the surfaces of the base material for the band-shaped negative electrode core body 32 along the longitudinal direction of the base material for the band-shaped negative electrode core body 32, and the negative electrode core body 32 is exposed in a portion where the negative electrode mixture layer 34 is not formed. In the cutting step, the laser light is scanned according to the shapes of the tip end portion 36 and the negative electrode tab 38. The tip end portion 36 is cut out by the laser light scanning the portion where the negative electrode mixture layer 34 is formed, on an inner side from a boundary between the portion where the negative electrode core body 32 is exposed and a portion where the negative electrode mixture layer 34 is formed. The negative electrode tab 38 protrudes to an outer side from the tip end portion 36, and is cut out by cutting the portion where the negative electrode core body 32 is exposed while including the portion where the negative electrode mixture layer 34 is formed in a root portion.

Characteristics of the laser light and a laser irradiation optical system are not particularly limited, and it is possible to produce the desired negative electrode plate 30 by properly adjusting them according to thicknesses, compositions and the like of the negative electrode core body 32 and the negative electrode mixture layer 34 in a range of conditions in Table 1, for example.

**[Table 1]**

| Laser irradiation condition | Range |
|---|---|
| Repetition frequency | 10 kHz to 150 kHz |
| Energy per electrode plate thickness | 0.33 mJ/mm·µm to 4.13 mJ/mm·µm |
| Pulse width | 10 ns to 300 ns |

When a repetition frequency is low, pulse energy becomes large and an electrode plate cut surface becomes rough, and therefore the repetition frequency is preferably 10 kHz or more, whereas when the repetition frequency is high, pulse energy decreases to worsen workability to decrease a line speed, and therefore the repetition frequency is preferably 150 kHz or less.

When the energy per electrode plate thickness is small, the mixture agent peels from the core body surface, and therefore the energy per electrode plate thickness is preferably 0.33 mJ/mm·µm or more, whereas when the energy per electrode plate thickness is large, the width "a" of the tip end portion 36 becomes too large, and therefore the energy per electrode plate thickness is preferably 4.13 mJ/mm·µm or less.

The pulse width is preferably 10 to 300 ns, and more preferably 50 to 200 ns.

In order to scan the laser light, the base material for the negative electrode core body 32 may be moved, or the laser light may be moved by using a galvano scanner system, for example. Further, an end portion on an opposite side to the side where the negative electrode tab 38 extends, a winding start end, and a winding termination end may be cut by using the laser light as described above or may be cut by using a slit blade.

As described above, according to the electrode plate of the present embodiment, it is possible to suppress falling-off of the active material.

### REFERENCE SIGNS LIST

1 exterior body
2 sealing plate
3 electrode group
4 positive electrode terminal
5 positive electrode current collector
6 negative electrode terminal
7 negative electrode current collector
8, 10 inner side insulating member
9, 11 outer side insulating member
12 insulating sheet
13 electrolyte solution injection hole
14 sealing plug
15 gas exhaust vent
16 battery case
20 positive electrode plate
22 positive electrode core body
24 positive electrode mixture layer
28 positive electrode tab
30 negative electrode plate
32 negative electrode core body
34 negative electrode mixture layer
36 tip end portion
38 negative electrode tab
40 separator
50 top surface (of electrode assembly)
100 non-aqueous electrolyte secondary battery

## Claims

1. An electrode plate included in a wound type or stacked type electrode assembly, comprising:
a band-shaped electrode core body;
a mixture layer formed on both surfaces of the electrode core body; and
a tab extended from one end portion of the electrode core body in a short side direction of the electrode core body, wherein
a tip end portion of the electrode core body is covered with the mixture layer in the end portion on a side where the tab extends.

2. The electrode plate according to claim 1, wherein the tip end portion has a claw shape in a sectional view taken along a thickness direction of the electrode core body.

3. The electrode plate according to claim 1 or 2, wherein the electrode plate is a negative electrode plate.

4. The electrode plate according to any one of claims 1 to 3, wherein a thickness of the mixture layer that covers the tip end portion is thinner than a thickness of one surface of the mixture layer formed on an inner side from the tip end portion of the electrode core body.

5. The electrode plate according to claim 4, wherein as for a width, in the short side direction of the electrode core body, of the tip end portion of the electrode core body, a width "a" in one surface is larger than a width "b" in the other surface.

6. A non-aqueous electrolyte secondary battery, comprising:
a wound type or stacked type electrode assembly including the electrode plate according to claim 5;
an exterior body having an opening that houses the electrode assembly; and
a sealing plate that seals the opening and is connected with the tab, wherein
a root of the tab tilts, and an angle formed by a surface of the tab on a side where the width of the tip end portion is "a" and a top surface of the electrode assembly is an obtuse angle.

7. The non-aqueous electrolyte secondary battery according to claim 6, wherein
the electrode assembly is of a wound type, and
in the electrode assembly, the surface on the side where the width of the tip end portion is "a" faces an inside of winding.

8. A method for producing an electrode plate included in a wound type or stacked type electrode assembly, including
a mixture layer forming step of forming a band-shaped mixture layer on both surfaces of a base material for a band-shaped electrode core body along a longitudinal direction of the base material for the band-shaped electrode core body; and
a cutting step of cutting out an electrode plate having the band-shaped electrode core body with the mixture layer formed on the both surfaces, and a tab extended from one end portion of the electrode core body in a short side direction of the electrode core body, by irradiating one surface of the base material for the electrode core body with laser light, wherein
in the electrode plate that is cut out in the cutting step, a tip end portion of the electrode core body is covered with the mixture layer in the end portion on a side where the tab extends.

9. The method for producing the electrode plate included in the wound type or stacked type electrode assembly according to claim 8, wherein irradiation conditions of the laser light are that a wavelength is 1.06 µm, a repetition frequency is 10 to 150 kHz, energy per electrode plate thickness is 0.33 mJ/mm·µm to 2.00 mJ/mm·µm, and a pulse width is 30 ns to 300 ns.
